# EUROPÄISCHE PATENTSCHRIFT

(11) **EP 3 622 490 B1**
(45) Veröffentlichungstag und Bekanntmachung des Hinweises auf die Patenterteilung: **07.07.2021**
(21) Anmeldenummer: 18733156.6
(22) Anmeldetag: 09.05.2018
(51) Int. Cl.: G07C 9/00

(54) **VERFAHREN ZUM BETREIBEN EINES DISTRIBUTIONSAUTOMATEN**
METHOD FOR OPERATING A DISPENSING MACHINE
PROCÉDÉ DE COMMANDE D'UN DISTRIBUTEUR AUTOMATIQUE

(30) Priorität: 12.05.2017 DE 102017110346
(43) Veröffentlichungstag der Anmeldung: 18.03.2020
(73) Patentinhaber: KEBA AG, 4041 Linz (AT)
(72) Erfinder: KIRCHTAG, Harald, 1070 Wien (AT); SCHEBA, Franz, 4312 Ried/Riedmark (AT)
(74) Vertreter: Burger, Hannes
(86) Internationale Anmeldenummer: PCT/AT2018/060090
(87) Internationale Veröffentlichungsnummer: WO 2018/204962

(56) Entgegenhaltungen:
- WO-A1-2011/009449
- WO-A1-2015/114331
- DE-A1-102013 110 385
- US-A- 5 416 472
- US-B1- 6 185 773
- Anonymous: "Electric strike", , 21. März 2016 (2016-03-21), XP055501507, Gefunden im Internet: URL:https://en.wikipedia.org/w/index.php?t itle=Electric_strike&oldid=711268411 [gefunden am 2018-08-22]
- Jerry Levine: "Electric Strikes: Everything You Should Know | Locksmith Ledger", , 31. Januar 2017 (2017-01-31), XP055501518, Gefunden im Internet: URL:https://web.archive.org/web/2017013119 4549/https://www.locksmithledger.com/artic le/10238119/electric-strikes-everything-yo u-should-know [gefunden am 2018-08-22]
- Anonymous: "Utility frequency", , 27. April 2017 (2017-04-27), XP055501523, Gefunden im Internet: URL:https://en.wikipedia.org/w/index.php?t itle=Utility_frequency&oldid=777470729#Tim e_error_correction_(TEC) [gefunden am 2018-08-22]

## Beschreibung

Die Erfindung betrifft ein Verfahren zum Betreiben eines Distributionsautomaten, insbesondere für die Verteilung, Übergabe, temporäre Aufbewahrung oder den automatisierten Verkauf von Gegenständen, wobei für sehbeeinträchtigte Personen das geöffnete Aufnahmefach akustisch angezeigt wird.

Die DE 10 2013 110 385 A1 offenbart einen Distributionsautomaten für die Verteilung, Übergabe, temporäre Aufbewahrung oder den automatisierten Verkauf von Gegenständen. Der Distributionsautomat weist eine aus einer Mehrzahl an Aufnahmefächern bestehende Fachanordnung auf. Der Distributionsautomat weist außerdem eine elektronische Betriebssteuerung auf, welche Betriebssteuerung die Abläufe des Distributionsautomaten steuert.

Der Distributionsautomat, wie er in der DE 10 2013 110 385 A1 beschrieben ist, weist den Nachteil auf, dass das jeweils geöffnete Aufnahmefach von blinden Personen nur schwer aufgefunden werden kann.

Aus der DE 10 2007 035 218 A1 sind verschiedene Ausführungen von automatisiert entriegelbaren Schlössern zur Verwendung für schließfachartige Aufbewahrungssysteme bekannt.

Aus der US 6185773 B1 ist eine Schließfachanlage mit mehreren Schließfächern bekannt. Die Schließfächer weisen jeweils einen Lautsprecher auf, der ähnlich wie bei Armbanduhren ein Pieps-Signal abgibt. Dadurch können auch blinde Personen ein geöffnetes Schließfach auffinden.

Die Schließfachanlage der US 6185773 B1 weist den Nachteil auf, dass die Lautsprecheranlage bestehend aus einer Mehrzahl von Lautsprechern, einer Verkabelung, einem Verstärker, einer Steuerung und weiteren Bauteilen teuer ist. Besonders hohe Kosten entstehen, wenn aufgrund von aktuellen Gesetzeslagen ein Distributionsautomat, wie er in der DE 10 2013 110 385 A1 beschrieben ist, mit einem akustischen System, wie es in der US 6185773 B1 beschrieben ist nachgerüstet werden muss.

Die WO 2015/114331 A1 offenbart ein Verfahren zum Betreiben eines Distributionsautomaten für die Verteilung, Übergabe, temporäre Aufbewahrung oder den automatisierten Verkauf von Gegenständen.

Aufgabe der vorliegenden Erfindung war es, die Nachteile des Standes der Technik zu überwinden und einen Distributionsautomaten bzw. ein Verfahren zum Betrieb eines Distributionsautomaten zur Verfügung zu stellen, welcher Sehbehindertengerecht ist und einen möglichst einfachen Aufbau aufweist.

Diese Aufgabe wird durch ein Verfahren gemäß den Ansprüchen gelöst.

Erfindungsgemäß ist ein Verfahren zum Betreiben eines Distributionsautomaten für die Verteilung, Übergabe, temporäre Aufbewahrung oder den automatisierten Verkauf von Gegenständen vorgesehen. Der Distributionsautomat umfasst eine Fachanordnung mit einer Mehrzahl an Aufnahmefächern, wobei den Aufnahmefächern Fachtüren und Verriegelungsvorrichtungen zum Versperren der Aufnahmefächer zugeordnet sind, wobei die Verriegelungsvorrichtungen jeweils einen Aktor umfassen, welcher mittels einem energiebehafteten Signal aktiviert wird und die Verriegelungsvorrichtungen dadurch automatisiert entriegelbar sind, sodass die Fachtüren jeweils unabhängig voneinander entsperrt und geöffnet werden können und Gegenstände von berechtigten Personen in Aufnahmefächern deponiert und/oder aus den Aufnahmefächern entnommen werden können, wobei der Distributionsautomat eine elektronische Betriebssteuerung aufweist, welche Betriebssteuerung die Abläufe des Distributionsautomaten steuert. Das erfindungsgemäße Verfahren weist folgende Verfahrensschritte auf:
- Eingabe eines Befehls in die Betriebssteuerung durch den Benutzer und Auswählen eines zu öffnenden Aufnahmefaches durch den Benutzer oder die Betriebssteuerung;
- Automatisiertes Entriegeln der Fachtüre des ausgewählten Aufnahmefaches durch Beaufschlagen des Aktors der Verriegelungsvorrichtung mit einem energiebehafteten Signal, wobei die Fachtüre des ausgewählten Aufnahmefaches mittels einem Öffnungshilfsmittel zumindest teilweise geöffnet wird;
- Akustische Anzeige der Position des entriegelten Aufnahmefaches durch wiederholtes oder für eine begrenzte Zeitdauer fortwährendes Beaufschlagen des Aktors der Verriegelungsvorrichtung mit dem energiebehafteten Signal, wobei die akustische Anzeige des geöffneten Aufnahmefaches beendet wird, wenn von einem Erfassungselement erfasst wird, dass die Fachtüre des ausgewählten Aufnahmefaches wieder geschlossen wird.

Von Vorteil am erfindungsgemäßen Verfahren ist, dass durch die akustische Anzeige des entriegelten Aufnahmefaches auch sehbeeinträchtigte Benutzer zum jeweils für sie vorgesehenen Aufnahmefach geführt werden können. Dadurch, dass die akustische Anzeige des entriegelten Faches mittels dem Aktor der Verriegelungsvorrichtung bewerkstelligt wird, ist es nicht zwingend erforderlich, dass im Distributionsautomaten Lautsprecher und weitere Elemente die zur akustischen Anzeige notwendig sind, wie etwa Verkabelung, Audioverstärker, eine eigene Steuerung oder sonstige Elemente zum Erzeugen von akustischen Signalen verbaut sind. Somit können die Distributionsautomaten einen möglichst einfachen Aufbau aufweisen und aus diesem Grund auch kostengünstig hergestellt werden. Besonders große Vorteile hat das erfindungsgemäße Verfahren, wenn herkömmliche Distributionsautomaten, wie sie aus der DE 10 2013 110 385 A1 bekannt sind, schon an ihrem Aufstellungsort platziert sind und aufgrund von Gesetzesänderungen eine akustische Anzeige des jeweiligen Faches notwendig wird. Hierbei kann eine aufwändige und kostenintensive Nachrüstung des Distributionsautomaten vermieden werden, indem die Betriebssteuerung des Distributionsautomaten zum Ausführen des erfindungsgemäßen Verfahrens umprogrammiert wird.

Als energiebehaftetes Signal zum Entriegeln der Fachtüre bzw. zum akustischen Anzeigen des entriegelten Aufnahmefaches können verschiedenste Medien, wie etwa elektrischer Strom, Druckluft, Hydraulikflüssigkeit oder sonstiges verwendet werden. Vorzugsweise wird elektrischer Strom als Signalträger verwendet, da er präzise Signale liefern kann. Bei der Verwendung von elektrischem Strom als Signalträger können verschiedene Arten von Aktoren verwendet werden. Beispielsweise ist es denkbar, dass der Aktor einen Elektromagneten umfasst, welcher bei Strom- bzw. Spannungsbeaufschlagung eine mechanische Bewegung ausführt. In einem anderen Ausführungsbeispiel ist es auch denkbar, dass als Aktor beispielsweise ein Piezo-Element verwendet wird, welches ebenfalls bei Strom- bzw. Spannungsbeaufschlagung eine mechanische Bewegung ausführt.

Weiters kann es zweckmäßig sein, wenn zur akustischen Anzeige des geöffneten Aufnahmefaches das energiebehaftete Signal eine Frequenz zwischen 20Hz und 20kHz, insbesondere zwischen 40Hz und 6kHz, aufweist. Besonders bei energiebehafteten Signalen in einem derartigen Frequenzbereich kann das erzeugte, akustische Signal auch von älteren bzw. gehörbeeinträchtigten Personen gut wahrgenommen werden. Besonders Signale in einem Bereich von 4kHz können laut und deutlich wahrgenommen werden.

Ferner kann vorgesehen sein, dass zur akustischen Anzeige des geöffneten Aufnahmefaches die Frequenz und/oder der Signalverlauf des energiebehafteten Signals über den Anzeigezeitraum variiert wird. Von Vorteil ist hierbei, dass sich durch diese Maßnahme das akustische Signal von Umgebungsgeräuschen abheben kann, sodass es vom Benutzer gut hörbar ist. Insbesondere ist hierbei denkbar, dass das erzeugte akustische Signal in Form einer bestimmten Melodie wiedergegeben wird. Die Art des Signalverlaufes wird beispielsweise neben der Frequenz auch durch die Intensität des energiebehafteten Signales, wie etwa die Stromstärke oder die Spannungsstärke bestimmt.

Darüber hinaus kann vorgesehen sein, dass das energiebehaftete Signal zur akustischen Anzeige intermittierend aufgebracht wird, insbesondere dass das energiebehaftete Signal zwischen 0,1 Sekunden und 4 Sekunden aufgebracht wird und anschließend zwischen 0,1 Sekunden und 4 Sekunden nicht aufgebracht wird. Durch diese Maßnahme kann die Hörbarkeit des erzeugten akustischen Signales ebenfalls verbessert werden.

Erfindungsgemäß ist vorgesehen, dass die akustische Anzeige des geöffneten Aufnahmefaches beendet wird, wenn von einem Erfassungselement erfasst wird, dass die Fachtüre des ausgewählten Aufnahmefaches wieder geschlossen wird. Durch diese Maßnahme kann der Zeitraum in welchem die akustische Anzeige abgegeben wird, begrenzt werden. Insbesondere wird dadurch das energiebehaftete Signal nur solange wie notwendig an die Verriegelungsvorrichtung abgegeben.

Zusätzlich ist es auch denkbar, dass eine maximale Zeitspanne in der das akustische Signal abgegeben wird, durch die Betriebssteuerung vorgegeben ist. Die Zeitspanne kann vorzugsweise maximal zwischen 1 Minute und 10 Minuten liegen. Durch diese Maßnahme kann erreicht werden, dass bei einem nicht Auffinden des Faches durch einen Benutzer, der Distributionsautomat nicht übermäßig verschleißt bzw. es zu keiner übermäßigen Energieaufnahme des Distributionsautomaten kommt.

Gemäß einer Weiterbildung ist es möglich, dass der Aktor einen Elektromagneten umfasst und das energiebehaftete Signal ein elektrischer Strom ist, mittels welchem der Elektromagnet magnetisiert wird.

Ferner kann es zweckmäßig sein, wenn die akustische Anzeige des geöffneten Aufnahmefaches dann erfolgt, wenn eine Sehbeeinträchtigung des Benutzers nicht dezidiert ausgeschlossen werden kann, insbesondere wenn bei einem im System erfassten Benutzer eine Sehbeeinträchtigung hinterlegt ist oder wenn der Benutzer nicht im System erfasst ist. Durch diese Maßnahme kann erreicht werden, dass sehbeeinträchtigte Benutzer auf jeden Fall eine akustische Hilfestellung zum Auffinden des ihnen zugewiesenen Faches haben. Bei Benutzern, welche im System angemeldet sind, kann beim Anmeldevorgang abgefragt werden, ob sie eine Sehbeeinträchtigung haben und diese Information dazu verwendet werden, um den Distributionsautomaten entsprechend zu steuern. Bei Benutzern, die im System nicht angemeldet sind bzw. bei denen keine Information bezüglich des Sehvermögens hinterlegt ist, wird davon ausgegangen, dass sie eine Sehbeeinträchtigung haben und wird das akustische Signal ausgegeben. Dadurch kann gewährleistet werden, dass bei allen Benutzern mit einer Sehbeeinträchtigung auch ein akustisches Signal ausgegeben wird.

Darüber hinaus kann vorgesehen sein, dass bei der akustischen Anzeige des entriegelten Aufnahmefaches die Frequenz oder die Ansteuerenergie des energiebehafteten Signals so gewählt wird, dass der Aktor die Verriegelungsvorrichtung nicht vollständig öffnet oder nicht vollständig schließt, sodass die Verriegelungsvorrichtung um den verschlossenen Zustand oder um den geöffneten Zustand schwingt. Von Vorteil ist hierbei, dass zur akustischen Anzeige der Aktor nicht vollständig zwischen seiner geöffneten Position und seiner geschlossenen Position verschoben wird und somit der Verschleiß in der Verriegelungsvorrichtung möglichst gering gehalten wird.

Erfindungsgemäß ist weiters vorgesehen, dass beim automatisierten Entriegeln der Fachtüre des ausgewählten Aufnahmefaches die Fachtüre des ausgewählten Aufnahmefaches mittels einem Öffnungshilfsmittel zumindest teilweise geöffnet wird. Dadurch kann der Benutzer den Distributionsautomaten mit seinen Händen abtasten und dadurch das geöffnete Fach auffinden. Gemäß einer besonderen Ausprägung ist es möglich, dass mehrere Verriegelungsvorrichtungen derart zeitversetzt mit einem energiebehafteten Signal beaufschlagt werden, dass von einer zentralen Bedienerschnittstelle weg zum geöffneten Aufnahmefach hin ein Akustikpfad gebildet wird. Diese Maßnahme kann besonders bei sehr großen Distributionsautomaten erforderlich sein, nämlich dann, wenn das entriegelte Aufnahmefach sich in einer großen Entfernung zur Bedienerschnittstelle befindet. Bei einer derartigen Konstellation könnte es nämlich vorkommen, dass das akustische Signal des entriegelten Aufnahmefaches an der Bedienerschnittstelle schlecht oder gar nicht wahrgenommen werden kann. Erst durch den Akustikpfad kann der Benutzer zu dem entsprechenden Aufnahmefach geführt werden.

Entsprechend einer vorteilhaften Weiterbildung kann vorgesehen sein, dass beim Bilden des Akustikpfades die der Bedienerschnittstelle nächstliegende Verriegelungsvorrichtung zuerst mit einem energiebehafteten Signal beaufschlagt wird und aufeinanderfolgend zum geöffneten Aufnahmefach hin die einzelnen Verriegelungsvorrichtungen mit einem energiebehafteten Signal beaufschlagt werden, wobei bei Beaufschlagung einer weiteren Verriegelungsvorrichtung die zuvor mit dem energiebehafteten Signal beaufschlagte Verriegelungsvorrichtung nicht mehr mit dem energiebehafteten Signal beaufschlagt wird.

Beim Bilden eines Akustikpfades kann vorgesehen sein, dass jene Verriegelungsvorrichtungen, welche den Akustikpfad bilden nur so kurz, bzw. mit einem energiebehafteten Signal mit so wenig Energie angesteuert werden, dass die zugehörigen Fachtüren nicht vollständig entriegelt werden. Alternativ kann vorgesehen sein, dass die Öffnungshilfsmittel der Aufnahmefächer welche den Akustikpfad bilden nicht aktiviert werden, sodass selbst bei einem vollständigen Entriegeln der Fachtüren dieser Aufnahmefächer des Akustikpfades die Fachtüren nicht geöffnet werden.

Insbesondere kann es vorteilhaft sein, wenn die Verriegelungsvorrichtung des entriegelten Aufnahmefaches mit einem energiebehafteten Signal einer anderen Frequenz beaufschlagt wird als die Verriegelungsvorrichtungen, die den Akustikpfad bilden. Durch diese Maßnahme kann erreicht werden, dass das entriegelte Aufnahmefach einfach aufgefunden werden kann. Alternativ oder zusätzlich kann vorgesehen sein, dass die Verriegelungsvorrichtung des entriegelten Aufnahmefaches länger mit dem energiebehafteten Signal beaufschlagt wird als die Verriegelungsvorrichtungen die den Akustikpfad bilden.

In einer weiteren Alternative kann vorgesehen sein, dass die Verriegelungsvorrichtung des entriegelten Aufnahmefaches mit einem energiebehafteten Signal größerer Energiedichte beaufschlagt wird als die Verriegelungsvorrichtungen die den Akustikpfad bilden.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform eines Distributionsautomaten in perspektivischer Ansicht;
- Fig. 2: Aufnahmefächer des Distributionsautomaten in geöffnetem und geschlossenem Zustand;
- Fig. 3: eine perspektivische Darstellung eines Ausführungsbeispiels einer Verriegelungsvorrichtung;
- Fig. 4: ein Ablaufdiagramm eines möglichen Betriebsmodus des Distributionsautomaten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

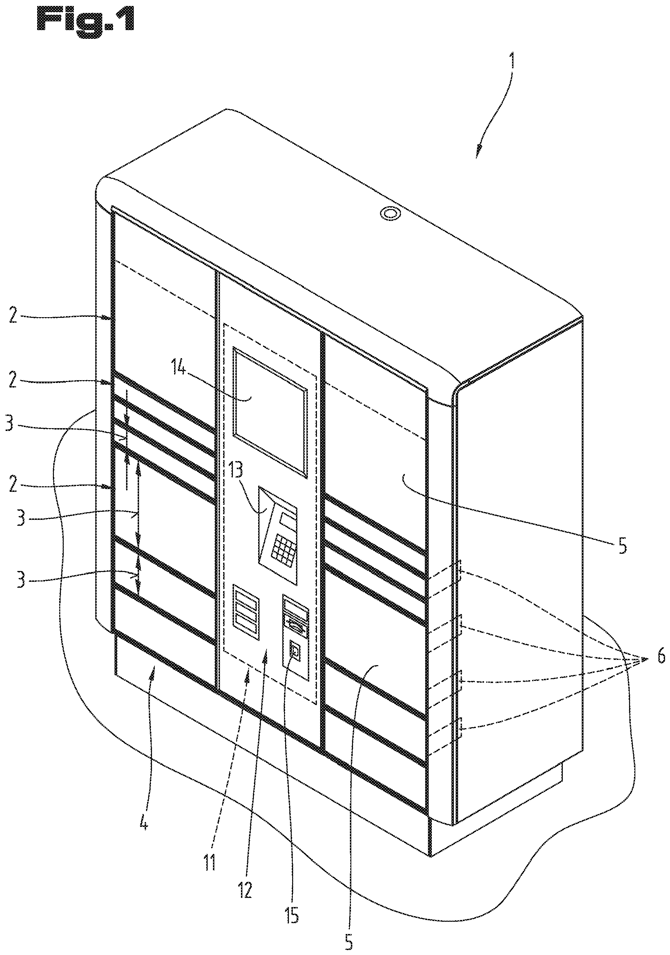

In Fig. 1 ist eine mögliche Ausgestaltungsvariante eines Distributionsautomaten 1 dargestellt. Ein derartiger Distributionsautomat 1 kann beispielsweise für die Verteilung, Übergabe, temporäre Aufbewahrung oder den Verkauf von Gegenständen, wie postalische Sendungen oder Waren, vorgesehen sein. Zur Aufnahme und temporären Lagerung dieser Gegenstände weist der Distributionsautomat 1 eine Mehrzahl von Aufnahmefächern 2 mit unterschiedlichen geometrischen Dimensionen, insbesondere mit unterschiedlichen baulichen Fachhöhen 3 auf. Diese Aufnahmefächer 2 sind Teil einer Fachanordnung 4, wobei den Aufnahmefächern 2 Fachtüren 5 zugeordnet sind.

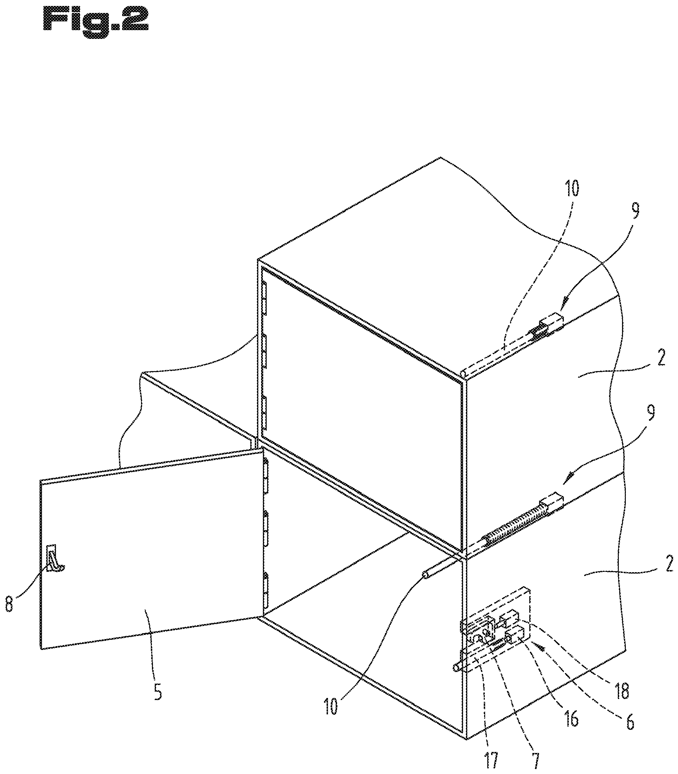

Im in Fig. 1 gezeigten Ausführungsbeispiel ist außerdem jedem Aufnahmefach 2 zumindest eine Verriegelungsvorrichtung 6 zugeordnet, durch welche Verriegelungsvorrichtung 6 das jeweilige Aufnahmefach 2 versperrt werden kann. Hierbei kann in bekannter Art und Weise das Versperren der Fachtür 2 durch Zusammenwirken eines der Verriegelungsvorrichtung 6 zugeordneten Verriegelungselements 7 mit einem mit der Fachtür 5 fest verbundenen Sperrelement 8 erzielt werden, wie dies in Fig. 2 veranschaulicht ist.

Zur Automatisierung des Zugriffs auf ein Aufnahmefach 2 gemäß Fig. 1 ist dessen Verriegelungsvorrichtung 6 elektronisch ansteuerbar ausgeführt, insbesondere kann die Verriegelungsvorrichtung 6 durch ein energiebehaftetes, elektrisches Signal automatisiert entriegelt werden. Dabei können die Fachtüren 5 jeweils unabhängig voneinander entsperrt und geöffnet werden, sodass Gegenstände in Abhängigkeit von Nutzungs- und/oder Zugriffsrechten auf die Aufnahmefächer 2 oder auf die in einem Aufnahmefach 2 befindlichen Gegenstände von berechtigten Personen in Aufnahmefächern 2 deponierbar und/oder aus den Aufnahmefächern 2 entnehmbar sind.

Dabei kann der eigentliche Öffnungsvorgang einer Fachtür 5 zumindest teilweise automatisiert durch elektrische Antriebsorgane erfolgen. Alternativ, in einer nicht beanspruchten Variante, ist ein rein manuelles Öffnen einer Fachtür 5 durch einen Berechtigten bzw. am Automaten angemeldeten Benutzer nach einem erfolgten Entriegelungsvorgang umsetzbar.

Bei dem in den Fig. 1 und 2 gezeigten Ausführungsbeispiel weisen die Fachtüren 5 der Aufnahmefächer 2 keine Türgriffe oder dergleichen auf. Bei derart ausgestalteten Fachtüren 5 kann ein Öffnungsvorgang durch geeignete Öffnungshilfsmittel 9 unterstützt werden, wie dies in Fig. 2 gezeigt ist. Beispielsweise kann in einer Verriegelungsvorrichtung 6 oder in einem Aufnahmefach 2 ein durch ein vorgespanntes Federmittel angetriebenes Stößelelement 10 ausgebildet sein, welches Stößelelement 10 bewirkt, dass eine Fachtür 5 nach einem erfolgten Entriegelungsvorgang einen Spalt weit aufspringt und die Fachtür 5 sodann geöffnet werden kann.

Nach erfolgtem Zugriff auf ein Aufnahmefach 2 kann ein Wiederversperren einer Fachtür 5, je nach Typ der dem Aufnahmefach 2 zugeordneten Verriegelungsvorrichtung 6 auf unterschiedliche Weise erfolgen. So kann beispielsweise ein Verriegelungsvorgang auf rein manuelle Art und Weise durch aktives Zudrücken der Fachtür 5 eines Aufnahmefaches 2 erfolgen. Eine weitere Möglichkeit besteht in einem automatisierten Verschließen und Versperren einer Fachtür 5 durch entsprechende elektrische Antriebsorgane und Antriebsmechaniken. Auch sind bei einer entsprechend ausgestatteten Verriegelungsvorrichtung 6 Kombinationen aus manuellen und automatisierten, elektrischen bzw. elektronischen Abläufen realisierbar. Derartige Verschlussvorgänge können beispielsweise ein manuelles Zudrücken einer Fachtür 5 erfordern, der eigentliche Verriegelungsvorgang kann aber elektrisch bzw. elektronisch steuerbar ausgeführt sein.

Um die Betriebsabläufe des Distributionsautomaten 1 und dessen bestimmungsgemäße Funktionen zumindest teilweise zu automatisieren, ist dem Distributionsautomaten eine elektronische Betriebssteuerung 11 zugeordnet bzw. wie in Fig. 1 veranschaulicht in den Distributionsautomaten 1 baulich integriert. Eine solche elektronische Betriebssteuerung 11 umfasst dabei zumindest eine Recheneinheit in Form eines programmierbaren, softwaregesteuerten Prozessors oder Mikrokontrollers zwecks Steuerung, Überwachung bzw. Regelung der Funktionen bzw. Abläufe des Distributionsautomaten 1.

Weiters kann vorgesehen sein, dass der Distributionsautomat 1 zusätzlich zur Betriebssteuerung 11 wenigstens eine weitere Steuerungsvorrichtung in Form einer Sicherheitssteuerung aufweist. Diese Sicherheitssteuerung kann dabei baulich eigenständig am bzw. im Distributionsautomaten 1 ausgestaltet sein und mit der Betriebssteuerung 11 zur Datenübertragung gekoppelt sein. Der Einfachheit halber wird in diesem Dokument nur von der Betriebssteuerung 11 gesprochen, wobei die Befehle auch zur Gänze oder teilweise von der Sicherheitssteuerung ausgeführt werden können. Mit anderen Worten ausgedrückt wird unter dem Begriff Betriebssteuerung 11 jegliche Steuerung des Distributionsautomaten 1 gemeint.

Die in Fig. 1 gezeigte Betriebssteuerung 11 umfasst ein benutzerseitiges Interface, insbesondere eine Bedienerschnittstelle 12, welche zur Mensch-Maschine-Kommunikation ausgebildet ist. Diese Bedienerschnittstelle 12 kann dabei wie es in Fig. 1 gezeigt ist, baulich in den Distributionsautomaten 1 integriert sein, kann alternativ aber auch baulich eigenständig ausgebildet sein. Ebenso ist eine mobile Anzeige/Eingabevorrichtung vorstellbar, welche mit der Betriebssteuerung 11 zum Beispiel über eine Funkschnittstelle in Verbindung stehen kann.

Im in Fig. 1 gezeigten Ausführungsbeispiel weist die Bedienerschnittstelle 12 entsprechende Eingabehilfsmittel 13 und Ausgabehilfsmittel 14 auf, über welche eine Beeinflussung der betrieblichen Funktionen und Abläufe des Distributionsautomaten 1 erfolgen kann bzw. über welche Statusinformationen des Distributionsautomaten 1 ersichtlich sind. Solche Eingabehilfsmittel 13 und Ausgabehilfsmittel 14 können dabei in Form von Schaltern, Tastaturen, Displays oder anderen gemäß dem Stand der Technik bekannten Mitteln ausgebildet sein. Selbstverständlich sind auch kombinierte Ein- und Ausgabehilfsmittel, zum Beispiel in Form eines berührungssensitiven Touch-Screens möglich. Weiters kann der Distributionsautomat 1 durch die Betriebssteuerung 11 ansteuerbare bzw. lesbare Belegscanner, Barcodescanner, Belegdrucker und dergleichen umfassen.

Die Bedienerschnittstelle 12 der Betriebssteuerung 11 kann weiters Identifikations- bzw. Berechtigungsüberprüfungsmittel 15 aufweisen. Ein derartiges elektronisches Berechtigungsüberprüfungsmittel 15 kann, wie an sich bekannt, zum Beispiel durch Kartenlesegeräte für Identifikationskarten oder Kredit- und andere Zahlkarten gebildet sein. Alternativ oder zusätzlich können Ein/Ausgabemittel zur manuellen Eingabe einer Berechtigung, zum Beispiel in Form von Benutzernamen und/oder PIN-Codes ausgebildet sein. Schließlich kann die Berechtigungsüberprüfung zur Benutzung des Distributionsautomaten 1 auch über die Erfassung von Barcodeabschnitten, biometrischen Merkmalen, wie Fingerabdruck oder Spracherkennung, und/oder durch mechanische Schlüssel oder Transponder erfolgen. Auch sind Kombinationen solcher Berechtigungsüberprüfungsmittel 15 anwendbar.

Nach einem positiven Ergebnis der Überprüfung der Zugriffsberechtigung auf ein Aufnahmefach 2 kann die Betriebssteuerung 11 des Distributionsautomaten 1 zur Generierung eines Entriegelungskommandos vorgesehen sein, welches Entriegelungskommando eine Voraussetzung für ein Entriegeln einer Verriegelungsvorrichtung 6 und für ein nachfolgendes Öffnen der Fachtür 5 des Aufnahmefaches 2 darstellt.

Je nach Einsatzprofil des Distributionsautomaten 1 bzw. je nach Größe und Anordnung der Aufnahmefächer 2 des Automaten 1, können den Aufnahmefächern 2 unterschiedliche Typen von Verriegelungsvorrichtungen 6 zugeordnet sein. Bevorzugt werden entweder automatisiert ent- und verriegelbare Verriegelungsvorrichtungen 6, oder automatisiert entriegelbare und manuell verriegelbare Verriegelungsvorrichtungen 6 verwendet. Dabei werden manuell verriegelbare Verriegelungsvorrichtungen 6 bevorzugt für kleine Aufnahmefächer 2 und Aufnahmefächer 2, welche in großer Höhe innerhalb der Fachanordnung 4 positioniert sind, eingesetzt.

Aufnahmefächer 2 mit besonders großer Fachhöhe 3 können aus Gründen der Manipulationssicherheit zwei oder mehr als zwei Verriegelungsvorrichtungen 6 aufweisen.

Wie aus Fig. 2 ersichtlich ist, können zumindest einzelne Verriegelungsvorrichtungen 6 des Distributionsautomaten 1 Erfassungselemente 16 zur Erfassung, ob eine Fachtür 5 eines Aufnahmefaches 2 in geöffnetem oder geschlossenem Zustand vorliegt, aufweisen. Derartige Erfassungselemente 16 können beispielsweise als Sensoren in Form von Lichtschranken oder Entfernungsmessvorrichtungen ausgestaltet sein. Alternativ oder zusätzlich kann eine Ausgestaltung solcher Erfassungselemente 16 auch in Form von Schaltelementen, welche im Zuge des Schließens einer Fachtür 5 durch entsprechende Übertragungselemente 17 betätigt werden können, erfolgen. Selbstverständlich können derartige Erfassungselemente 16 bzw. Übertragungselemente 17 auch der Fachtür 5 und/oder dem Aufnahmefach 2 zugeordnet sein. Bevorzugt sind diese Erfassungselemente 16 mit der Betriebssteuerung 11 leitungsverbunden, bzw. zur Übertragung der Zustandsinformation der Fachtür 5 an die Betriebssteuerung 11 via eine Schnittstelle ausgestaltet. Insbesondere zweckmäßig ist eine derartige Maßnahme für Verriegelungsvorrichtungen 6, welche lediglich für den Entriegelungsvorgang angesteuert werden können, also bei Verriegelungsvorrichtungen 6, welche durch bloßes Zudrücken der zugeordneten Fachtür 5 mechanisch verriegelbar sind. Die Betriebssteuerung 11 kann in solchen Fällen die vom Erfassungselement 16 über die Schnittstelle übertragene Zustandsinformation über den Schließzustand der Fachtür 5 hinsichtlich Plausibilität und Personensicherheit überprüfen und gegebenenfalls Gegenmaßnahmen einleiten.

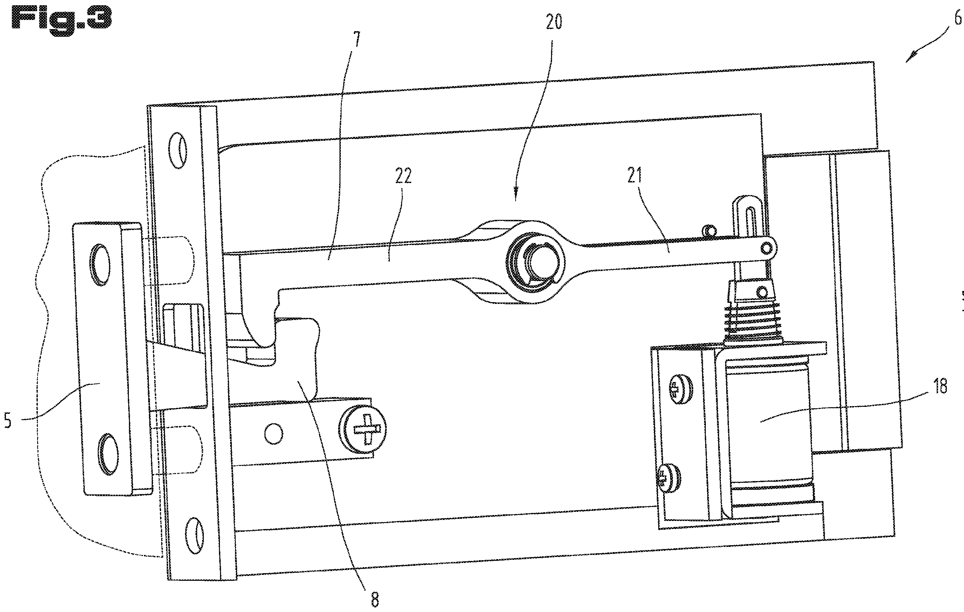

Die Fig. 3 zeigt in einer perspektivischen Darstellung ein Ausführungsbeispiel einer Verriegelungsvorrichtung 6 bei abgenommenem Seiten- bzw. Deckelteil. Die genaue Beschreibung der Verriegelungsvorrichtung 6 bzw. weitere Ausführungsbeispiele der Verriegelungsvorrichtung 6 finden sich in der DE 10 2007 035 218 A1.

Die Verriegelungsvorrichtung 6 ist an eine Steuervorrichtung angeschlossen, welche eine automatisierte bzw. ferngesteuerte Entriegelung des Verriegelungselementes 7 bewerkstelligen kann, wenn eine Zugriffsberechtigung auf das entsprechende Aufnahmefach 2 vorliegt.

Wie aus Fig. 3 weiters ersichtlich, kann vorgesehen sein, dass die Verriegelungsvorrichtung 6 ein Gehäuse 19 aufweist, welches zur Aufnahme des Verriegelungselementes 7 und des Aktors 18 dient. Das Verriegelungselement 7 kann in Form eines Hebels ausgebildet sein, welcher an einem Drehgelenk 20 gelagert ist. Insbesondere kann das Verriegelungselement 7 einen ersten Hebelarm 21 und einen zweiten Hebelarm 22 aufweisen. Der erste Hebelarm 21 kann mit dem Aktor 18 gekoppelt sein und der zweite Hebelarm 22 kann mit dem Sperrelement 8 zusammenwirken.

In dem Ausführungsbeispiel nach Fig. 3 ist der Aktor 18 in Form eines elektromagnetischen Stellgliedes ausgebildet. In weiteren Ausführungsbeispielen kann jedoch auch vorgesehen sein, dass der Aktor 18 beispielsweise in Form eines Pneumatikzylinders oder eines Hydraulikzylinders ausgebildet ist bzw. eine sonstige Antriebsenergie aufweist.

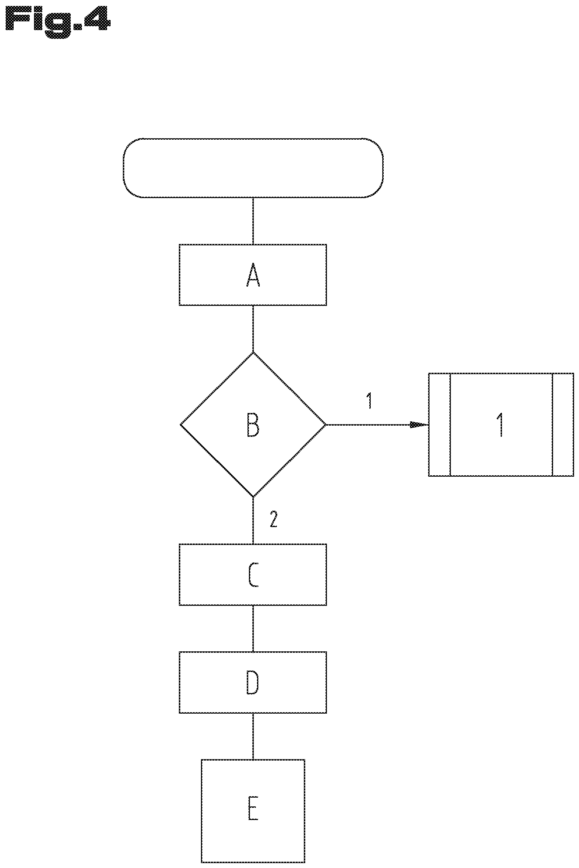

Fig. 4 zeigt ein Ablaufdiagramm des Prozesses zum Deponieren von Gegenständen in Aufnahmefächern 2 bzw. zum Entnehmen von Gegenständen aus den Aufnahmefächern 2.

In einem ersten Verfahrensschritt A gibt der Benutzer einen Befehl in die elektronische Betriebssteuerung 11 des Distributionsautomaten 1 ein. Bei der Entnahme von Gegenständen aus dem Distributionsautomaten 1 dient die Befehlseingabe dazu, dass sich der Benutzer entweder identifizieren kann, um einen für ihn hinterlegten Gegenstand abholen zu können oder dass der Benutzer beispielsweise gezielt ein Fach oder einen Gegenstand auswählt, welchen er entnehmen möchte. Beim Einlagern von Gegenständen dient die Eingabe eines Befehls in die elektronische Betriebssteuerung dazu, dass der Benutzer gezielt ein Aufnahmefach 2 auswählt bzw. dass dem Benutzer ein Aufnahmefach 2 zugewiesen wird.

Mit anderen Worten ausgedrückt, wird bei der Eingabe des Befehls in die Betriebssteuerung 11 entweder von der Betriebssteuerung 11 automatisiert ein Aufnahmefach 2 ausgewählt, welches für den Benutzer geöffnet werden soll, oder der Benutzer kann gezielt ein bestimmtes Aufnahmefach 2 auswählen, welches für ihn geöffnet werden soll.

Zur Eingabe des Befehls in die Betriebssteuerung 11 können verschiedenste Mittel verwendet werden, wie sie bereits in der DE 10 2013 110 385 A1 beschrieben werden. Beispielsweise ist es denkbar, dass die Befehlseingabe über die Bedienerschnittstelle 12 erfolgt. In weiteren Ausführungsbeispielen ist es beispielsweise auch denkbar, dass die Befehlseingabe in die Betriebssteuerung 11 über eine Fernsteuereinrichtung, wie etwa eine App auf einem Smartphone, erfolgt.

Bei der Eingabe eines Befehls in die Betriebssteuerung 11 ist es denkbar, dass abgefragt wird, ob der Benutzer eine Sehbeeinträchtigung aufweist. Weiters ist es auch denkbar, dass die Daten bezüglich einer eventuellen Sehbeeinträchtigung des Benutzers in seinem Benutzerprofil hinterlegt sind.

In wieder anderen Ausführungen ist es auch denkbar, dass derartige Daten, wie eine Sehbeeinträchtigung des Benutzers, gar nicht abgefragt werden und somit der Betriebssteuerung 11 nicht bekannt sind.

In einer betriebssteuerungsinternen Abfrage B wird nun abgefragt, ob der Benutzer eine Sehbeeinträchtigung aufweist. Nur in dem Fall, wenn bekannt ist, dass der Benutzer keine Sehbeeinträchtigung aufweist, wird das Aufnahmefach 2 entsprechend der in Fig. 4 dargestellten Variante 1 geöffnet, ohne dass dabei eine akustische Anzeige des entriegelten Aufnahmefaches 2 erfolgt. Der weitere Entnahmeprozess bzw. Einlegeprozess erfolgt wie er in der DE 10 2013 110 385 A1 beschrieben wurde.

Wenn jedoch in der Abfrage B von der Betriebssteuerung 11 ermittelt wird, dass der Benutzer eine Sehbeeinträchtigung aufweist bzw. wenn keine Daten bezüglich des Sehvermögens des Benutzers vorhanden sind, so wird in der Abfrage B entsprechend der Variante 2 vorgegangen.

In einem Verfahrensschritt C wird die Fachtüre 5 des ausgewählten Aufnahmefaches 2 durch Betätigen der Verriegelungsvorrichtung 6 entriegelt mittels dem energiebehafteten Signal entriegelt. Die Fachtüre 5 wird dabei mittels dem Öffnungshilfsmittel 9 zumindest teilweise oder auch zur Gänze geöffnet, sodass es für die Entnahme bzw. für das Einlegen eines Gegenstandes durch den Benutzer zur Verfügung steht.

In einem weiteren Verfahrensschritt D wird das entriegelte Aufnahmefach 2 durch Beaufschlagen des Aktors 18 der Verriegelungsvorrichtung 6 dem energiebehafteten Signal dem Benutzer akustisch angezeigt. Die Anzeige erfolgt dadurch, dass der Aktor 18 und damit die Verriegelungsvorrichtung 6 in Schwingung versetzt wird und somit ein Geräusch abgegeben wird.

In einer ersten Ausführungsvariante kann nach dem Entriegeln der Fachtüre 5 gemäß dem Verfahrensschritt C, die akustische Anzeige des entriegelten Aufnahmefaches 2 dadurch erfolgen, dass der Aktor 18 nach dem Öffnen der Fachtüre 5 in dem Verfahrensschritt D nochmals mit einem energiebehafteten Signal beaufschlagt wird.

In einer zweiten Ausführungsvariante kann nach dem Entriegeln der Fachtüre 5 gemäß dem Verfahrensschritt C, die akustische Anzeige des entriegelten Aufnahmefaches 2 dadurch erfolgen, dass der Aktor 18 nach dem Öffnen der Fachtüre 5 fortwährend mit dem energiebehafteten Signal beaufschlagt wird. Die Verfahrensschritte C und D können somit fließend ineinander greifen.

Der Verfahrensschritt D kann dem Benutzer helfen, die Position des entriegelten Aufnahmefaches 2 aufzufinden.

Die akustische Anzeige des entriegelten Aufnahmefaches 2 erfolgt bis die Fachtüre 5 des entriegelten Aufnahmefaches 2 wieder verschlossen wird.

Weitere eventuell notwendige Verfahrensschritte können gemäß dem Verfahrensschritt E derart ausgeführt werden, wie sie bereits in der DE 10 2013 110 385 A1 beschrieben wurden. Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Distributionsautomat
- 2: Aufnahmefach
- 3: Fachhöhe
- 4: Fachanordnung
- 5: Fachtür
- 6: Verriegelungsvorrichtung
- 7: Verriegelungselement
- 8: Sperrelement
- 9: Öffnungshilfsmittel
- 10: Stößelelement
- 11: Betriebssteuerung
- 12: Bedienerschnittstelle
- 13: Eingabehilfsmittel
- 14: Ausgabehilfsmittel
- 15: Berechtigungsüberprüfungsmittel
- 16: Erfassungselement
- 17: Übertragungselement
- 18: Aktor
- 19: Gehäuse
- 20: Drehgelenk
- 21: erster Hebelarm
- 22: zweiter Hebelarm

## Patentansprüche

1. Verfahren zum Betreiben eines Distributionsautomaten (1) für die Verteilung, Übergabe, temporäre Aufbewahrung oder den automatisierten Verkauf von Gegenständen, wobei der Distributionsautomat (1) eine Fachanordnung (4) mit einer Mehrzahl an Aufhahmefächern (2) umfasst, wobei den Aufnahmefächern (2) Fachtüren (5) und Verriegelungsvorrichtungen (6) zum Versperren der Aufnahmefächer (2) zugeordnet sind, wobei die Verriegelungsvorrichtungen (6) jeweils einen Aktor (18) umfassen, welcher mittels einem energiebehafteten Signal aktiviert wird und die Verriegelungsvorrichtungen (6) dadurch automatisiert entriegelbar sind, sodass die Fachtüren (5) jeweils unabhängig voneinander entsperrt und geöffnet werden können und Gegenstände von berechtigten Personen in Aufnahmefächern (2) deponiert und/oder aus den Aufnahmefächern (2) entnommen werden können, wobei der Distributionsautomat (1) eine elektronische Betriebssteuerung (11) aufweist, welche Betriebssteuerung (11) die Abläufe des Distributionsautomaten (1) steuert, wobei folgende Verfahrensschritte ausgeführt werden:
- Eingabe eines Befehls in die Betriebssteuerung (11) durch den Benutzer und Auswählen eines zu öffnenden Aufnahmefaches (2) durch den Benutzer oder die Betriebssteuerung (11);
- Automatisiertes Entriegeln der Fachtüre (5) des ausgewählten Aufnahmefaches (2) durch Beaufschlagen des Aktors (18) der Verriegelungsvorrichtung (6) des ausgewählten Aufnahmefaches (2) mit einem energiebehafteten Signal, wobei die Fachtüre (5) des ausgewählten Aufnahmefaches (2) mittels einem Öffnungshilfsmittel (9) zumindest teilweise geöffnet wird;
- Akustische Anzeige der Position des entriegelten Aufnahmefaches (2),
**dadurch gekennzeichnet, dass**
die akustische Anzeige der Position des entriegelten Aufnahmefaches (2) durch wiederholtes oder für eine begrenzte Zeitdauer fortwährendes Beaufschlagen des Aktors (18) der Verriegelungsvorrichtung (6) des ausgewählten Aufnahmefaches (2) mit dem energiebehafteten Signal erfolgt, wobei die akustische Anzeige des geöffneten Aufnahmefaches (2) beendet wird, wenn von einem Erfassungselement (16) erfasst wird, dass die Fachtüre (5) des ausgewählten Aufnahmefaches (2) wieder geschlossen wird.

2. Verfahren nach Anspruch 1, **dadurch gekennzeichnet, dass** zur akustischen Anzeige des geöffneten Aufnahmefaches (2) das energiebehaftete Signal eine Frequenz zwischen 20Hz und 20kHz, insbesondere zwischen 40Hz und 6kHz, aufweist.

3. Verfahren nach Anspruch 1 oder 2, **dadurch gekennzeichnet, dass** zur akustischen Anzeige des geöffneten Aufnahmefaches (2) die Frequenz und/oder der Signalverlauf des energiebehafteten Signals über den Anzeigezeitraum variiert wird.

4. Verfahren nach einem der vorhergehenden Ansprüche, **dadurch gekennzeichnet, dass** das energiebehaftete Signal zur akustischen Anzeige intermittierend aufgebracht wird, insbesondere dass das energiebehaftete Signal zwischen 0,1 Sekunden und 4 Sekunden aufgebracht wird und anschließend zwischen 0,1 Sekunden und 4 Sekunden nicht aufgebracht wird.

5. Verfahren nach einem der vorhergehenden Ansprüche, **dadurch gekennzeichnet, dass** der Aktor (18) einen Elektromagneten umfasst und das energiebehaftete Signal ein elektrischer Strom ist, mittels welchem der Elektromagnet magnetisiert wird.

6. Verfahren nach einem der vorhergehenden Ansprüche, **dadurch gekennzeichnet, dass** bei der akustischen Anzeige des entriegelten Aufnahmefaches (2) die Frequenz oder die Ansteuerenergie des energiebehafteten Signals so gewählt wird, dass der Aktor (18) die Verriegelungsvorrichtung (6) nicht vollständig schließt, sodass die Verriegelungsvorrichtung (6) um den geöffneten Zustand schwingt.

7. Verfahren nach einem der vorhergehenden Ansprüche, **dadurch gekennzeichnet, dass** mehrere Verriegelungsvorrichtungen (6) derart zeitversetzt mit einem energiebehafteten Signal beaufschlagt werden, dass von einer zentralen Bedienerschnittstelle (12) weg zum geöffneten Aufnahmefach (2) hin ein Akustikpfad gebildet wird.

8. Verfahren nach Anspruch 7, **dadurch gekennzeichnet, dass** beim Bilden des
Akustikpfades die der Bedienerschnittstelle (12) nächstliegende Verriegelungsvorrichtung (6) zuerst mit einem energiebehafteten Signal beaufschlagt wird und aufeinanderfolgend zum geöffneten Aufnahmefach (2) hin die einzelnen Verriegelungsvorrichtungen (6) mit einem energiebehafteten Signal beaufschlagt werden, wobei bei Beaufschlagung einer weiteren Verriegelungsvorrichtung (6) die zuvor mit dem energiebehafteten Signal beaufschlagte Verriegelungsvorrichtung (6) nicht mehr mit dem energiebehafteten Signal beaufschlagt wird.

9. Verfahren nach Anspruch 7 oder 8, **dadurch gekennzeichnet, dass** die Verriegelungsvorrichtung (6) des entriegelten Aufnahmefaches (2) mit einem energiebehafteten Signal einer anderen Frequenz beaufschlagt wird als die Verriegelungsvorrichtungen (6), die den Akustikpfad bilden.

## Claims

1. A method for operating a distribution machine (1) for the distribution, transfer, temporary storing or automated selling of objects, wherein the distribution machine (1) comprises a compartment arrangement (4) with a plurality of receiving compartments (2), wherein compartment doors (5) and locking devices (6) for locking the receiving compartments (2) are assigned to the receiving compartments (2), wherein each of the locking devices (6) comprises an actuator (18), which is activated by means of an energized signal and the locking devices (6) are thus automatically unlockable, so that the compartment doors (5) can each be opened independently of each other, and objects can be placed in the receiving compartments (2) and/or be removed from the receiving compartments (2) by authorized persons, wherein the distribution machine (1) has an electronic operating controller (11), which operating controller (11) controls the processes of the distribution machine (1), wherein the following method steps are carried out:
- inputting a command into the operating controller (11) by the user and selecting a receiving compartment (2) to be opened by the user or the operating controller (11);
- automated unlocking of the compartment door (5) of the selected receiving compartment (2) by applying an energized signal to the actuator (18) of the locking device (6) of the selected receiving compartment (2) with, wherein the compartment door (5) of the selected receiving compartment (2) is at least partially opened by means of an opening aid (9);
- acoustic indication of the position of the unlocked receiving compartment (2), **characterized in that**
the acoustic indication of the position of the unlocked receiving compartment (2) takes place by repeated or, for a limited amount of time, continuous application of the energized signal to the actuator (18) of the locking device (6) of the selected receiving compartment (2) to, wherein the acoustic notification of the opened receiving compartment (2) is stopped once a detection element (16) detects that the compartment door (5) of the selected receiving compartment (2) is closed again.

2. The method according to claim 1, **characterized in that** for the acoustic indication of the opened receiving compartment (2), the energized signal has a frequency between 20 Hz and 20 kHz, in particular between 40 Hz and 6 kHz.

3. The method according to claim 1 or 2, **characterized in that** for the acoustic indication of the opened receiving compartment (2), the frequency and/or the signal progression of the energized signal is varied over the indication period.

4. The method according to one of the preceding claims, **characterized in that** the energized signal for the acoustic indication is applied intermittently, in particular that the energized signal is applied for between 0.1 seconds and 4 seconds and is subsequently not applied for between 0.1 seconds and 4 seconds.

5. The method according to one of the preceding claims, **characterized in that** the actuator (18) comprises an electromagnet and the energized signal is an electric current, by means of which the electromagnet is magnetized.

6. The method according to one of the preceding claims, **characterized in that** in the case of the acoustic indication of the unlocked receiving compartment (2), the frequency or the actuation energy of the energized signal is selected such that the actuator (18) does not close the locking device (6) entirely, so that the locking device (6) swings about the opened state.

7. The method according to one of the preceding claims, **characterized in that** an energized signal is applied to multiple locking devices (6) in a time-delayed manner, such that an acoustic path is formed away from a central user interface (12) and towards the opened receiving compartment (2).

8. The method according to claim 7, **characterized in that** when forming the acoustic path, an energized signal is first applied to the locking device (6) closest to the user interface (12), and an energized signal is applied consecutively to the individual locking devices (6) toward the opened receiving compartment (2), wherein when a further locking device (6) is subjected to the signal, the energized signal is no longer applied to the locking device (6) previously subjected to the energized signal.

9. The method according to claim 7 or 8, **characterized in that** an energized signal of a different frequency is applied to the locking device (6) of the unlocked receiving compartment (2) than to those locking devices (6) which form the acoustic path.

## Revendications

1. Procédé de fonctionnement d'un automate de distribution (1) pour la répartition, le transfert, la conservation temporaire ou la vente automatisée d'objets, dans lequel l'automate de distribution (1) comprend un système de compartiments (4) avec une pluralité de compartiments de logement (2), dans lequel, aux compartiments de logement (2), correspondent des portes de compartiments (5) et des dispositifs de verrouillage (6) pour le blocage des compartiments de logement(2), dans lequel les dispositifs de verrouillage (6) comprennent chacun un actionneur (18) qui est activé au moyen d'un signal énergétique et les dispositifs de verrouillage (6) peuvent ainsi être déverrouillés de manière automatisée, de façon à ce que les portes des compartiments (5) puissent être déverrouillées et ouvertes indépendamment les unes des autres et à ce que des objets puissent être déposés dans les compartiments de logement (2) et/ou retirés des compartiments de logement (2) par des personnes autorisées, dans lequel l'automate de distribution (1) comprend une commande de fonctionnement électronique (11), cette commande de fonctionnement (11) contrôlant les processus de l'automate de distribution (1), dans lesquels les étapes suivantes sont exécutées :
- entrée d'une instruction dans la commande de fonctionnement (11) par l'utilisateur et sélection d'un compartiment de logement (2) à ouvrir par l'utilisateur ou la commande de fonctionnement (11) ;
- déverrouillage automatisé de la porte de compartiment (5) du compartiment de logement (2) sélectionné par la sollicitation de l'actionneur (18) du dispositif de verrouillage (6) du compartiment de logement (2) sélectionné avec un signal énergétique, dans lequel la porte de compartiment (5) du compartiment de logement (2) sélectionné est ouverte au moins partiellement à l'aide d'un moyen d'ouverture (9) ;
- indication acoustique de la position du compartiment de logement (2) déverrouillé, **caractérisé en ce que**
l'indication acoustique de la position du compartiment de logement (2) déverrouillé a lieu à l'aide d'une sollicitation répétée ou permanente pendant une durée limitée de l'actionneur (18) du dispositif de verrouillage (6) du compartiment de logement (2) sélectionné avec le signal énergétique, dans lequel l'indication acoustique du compartiment de logement (2) ouvert est terminé lorsqu'un élément de détection (16) détecte que la porte de compartiment (5) du compartiment de logement (2) sélectionné a été refermée.

2. Procédé selon la revendication 1, **caractérisé en ce que**, pour l'indication acoustique du compartiment de logement (2) ouvert, le signal énergétique présente une fréquence entre 20 Hz et 20 kHz, plus particulièrement entre 40 Hz et 6 kHz.

3. Procédé selon la revendication 1 ou 2, **caractérisé en ce que**, pour l'indication acoustique du compartiment de logement (2) ouvert, la fréquence et/ou le tracé du signal énergétique varie sur la période de l'indication.

4. Procédé selon l'une des revendications précédentes, **caractérisé en ce que** le signal énergétique pour l'indication acoustique est appliqué par intermittence, plus particulièrement **en ce que** le signal énergétique est appliqué entre 0,1 seconde et 4 secondes puis n'est pas appliqué entre 0,1 seconde et 4 secondes.

5. Procédé selon l'une des revendications précédentes, **caractérisé en ce que** l'actionneur (18) comprend un électro-aimant et le signal énergétique est un courant électrique au moyen duquel l'électro-aimant est magnétisé.

6. Procédé selon l'une des revendications précédentes, **caractérisé en ce que**, lors de l'indication acoustique du compartiment de logement (2) déverrouillé, la fréquence ou l'énergie de contrôle du signal énergétique est choisie de sorte que l'actionneur (18) ne ferme pas complètement le dispositif de verrouillage (6), de façon à ce que le dispositif de verrouillage (6) oscille autour de l'état ouvert.

7. Procédé selon l'une des revendications précédentes, **caractérisé en ce que** plusieurs dispositifs de verrouillage (6) sont sollicités de manière décalée dans le temps avec un signal énergétique de façon à ce qu'un trajet acoustique soit formé à partir d'une interface utilisateur centrale (12) en direction du compartiment de logement (2) ouvert.

8. Procédé selon la revendication 7, **caractérisé en ce que**, lors de la formation du trajet acoustique, le dispositif de verrouillage (6) le plus proche de l'interface utilisateur (12) est d'abord sollicité avec le signal énergétique puis, successivement en direction du compartiment de logement (2) ouvert, les différents dispositifs de verrouillage (6) sont sollicités avec un signal énergétique, dans lequel lors de la sollicitation d'un autre dispositif de verrouillage (6), le dispositif de verrouillage (6) précédemment sollicité avec le signal énergétique n'est plus sollicité avec le signal énergétique.

9. Procédé selon la revendication 7 ou 8, **caractérisé en ce que** le dispositif de verrouillage (6) du compartiment de logement (2) déverrouillé est sollicité avec un signal énergétique d'une autre fréquence que les dispositifs de verrouillage (6) qui forment le trajet acoustique.
